Europäisches Patentamt

European Patent Office

Office européen des brevets

(11) Veröffentlichungsnummer: **0 262 607**
**A2**

(12) **EUROPÄISCHE PATENTANMELDUNG**

(21) Anmeldenummer: **87114040.6**

(22) Anmeldetag: **25.09.87**

(51) Int. Cl.⁴: **B60M 1/20**

(30) Priorität: **26.09.86 DE 3632758**

(43) Veröffentlichungstag der Anmeldung:
**06.04.88 Patentblatt 88/14**

(84) Benannte Vertragsstaaten:
**BE CH FR GB IT LI**

(71) Anmelder: **Deutsche Eisenbahn Consulting GmbH**
**Oskar-Sommer-Strasse 15**
**D-6000 Frankfurt am Main 70(DE)**

(72) Erfinder: **Liebig, Adolf**
**Pommernstrasse 28**
**D-6100 Darmstadt/Eberstadt(DE)**

(74) Vertreter: **Schubert, Siegmar, Dipl.-Ing. et al**
**Patentanwälte Dr. V. Schmied-Kowarzik Dr.**
**P. Weinhold Dr.-Ing. G. Dannenberg Dr. D.**
**Gudel Dipl.-Ing. S. Schubert Dr. P. Barz**
**Grosse Eschenheimer Strasse 39**
**D-6000 Frankfurt am Main 1(DE)**

(54) **Oberleitungsstützpunkt insbesondere zur Anbringung in eingleisigen Tunneln.**

(57) Um Oberleitungsstützpunkte in Gewölbetunneln mit beschränktem Lichtraumprofil ohne große bautechnische Maßnahmen einsetzen zu können, wird ein Paar Fahrdrähte (1, 2) über eine parallel zu ihnen angeordnete Kulisse (6, 7) an Tragisolatoren (11, 12) aufgehängt, die annähernd in Längsrichtung der Kulisse zu dieser geneigt angeordnet sind. Die spannungsführenden Enden der Tragisolatoren liegen in etwa gleicher Höhe. Die Fahrdrähte sind parallel zur Längsrichtung der Kulisse (6, 7) gegenüber den spannungsführenden Enden der Tragisolatoren verschiebbar.

Fig. 1a

## Oberleitungsstützpunkt insbesondere zur Anbringung in eingleisigen Tunneln

Die Erfindung betrifft einen Oberleitungsstützpunkt insbesondere zur Anbringung in eingleisigen Tunneln nach dem Oberbegriff des Anspruchs 1.

Bei einem derartigen bekannten Oberleitungsstützpunkt, wie er von der Deutschen Bundesbahn eingesetzt wird, ist ein Tragseil in einer Tragseildrehklemme an einem Auslegerrohr eingeklemmt, welches über einen Rohrhalter, einen Auslegerarm, zwei Isolatoren, die einerseits an dem Auslegerarm fest verschraubt und andererseits an einer Hängesäule an Schwenkgelenken montiert sind. Die Hängesäule steht mit der Tunnelleibung in Verbindung. Sie ist bei Tunnel mit kreisförmigem Querschnitt über einen zusätzlichen Abstützarm an der Tunnelleibung angebracht. Die Fahrdrähte sind an einem Ende eines Seitenhalters über eine drehbare Seitenhalterklemme angeklemmt, das andere Ende mit dem Rohrhalter verbunden. Durch den Seitenhalter werden die Fahrdrähte in ihrer Seitenlage fixiert. De senkrechte Last, insbesondere die der Fahrdrähte und eine waagerechte Kraftkomponente eines Kettenwerkes aus Seitenzug infolge eines Gleisbogens bzw. der Seitenverschiebung (Zick-Zack) in der Geraden werden im wesentlichen von dem Tragseil und den Seitenhaltern übernommen. Eine Längsausdehnung des Kettenwerkes infolge Temperaturänderung ist durch Schwenken des Auslegerarms um die lotrecht übereinander angeordneten Schwenkgelenke der Isolatoren an der Hängesäule möglich. - Dieser Oberleitungstüzpunkt erstreckt sich im wesentlichen quer zu der Richtung des Tragseils und der Fahrdrähte sowie der Schienen in den Tunnelraum und ist vor allem wegen seines großen Raumbedarfs nachteilig. Solche Oberleitungsstützpunkte werden daher in der Regel nur bei neu zu errichtenden unterirdischen Bahnen, vorwiegend S-Bahnen, vorgesehen. Hierbei bestimmen die Oberleitungsstützpunkte unter anderem den lichten Tunneldurchmesser.

Eine andere bekannte Konstruktion von Oberleitungsstützpunkten, die ebenfalls von der Deutschen Bundesbahn eingesetzt wird, wird für eingleisige Gewölbetunnel verwendet. Sie geht ebenfalls von einem Tragseil aus, welches hier beweglich durch eine Tragseilklemme hindurchgeführt ist, die an einem starren Tragrohr angebracht ist. Die Enden des Tragrohres sind dabei jeweils über einen Isolator und eine Wandanschlußkonstruktion mit der Tunnelleibung verbunden. Der Fahrdraht ist über eine drehbare Seitenhalterklemme an einem Seitenhalter angeklemmt, der wiederum - schwenkbar über einen Hakenkloben und Ösenschelle am Tragrohr angeordnet ist. Die Längenausdehnung des Kettenwerkes wird dabei durch das Gleiten des Tragseiles in der Tragseilklemme, die hierzu besonders ausgebildet ist, und den schwenkbaren Seitenhalter ermöglicht. Diese Konstruktion erstreckt sich ebenfalls im wesentlichen quer zu den Gleisen und erfordert ebenfalls einen relativ großen Tunnelquerschnitt.

Der vorliegenden Erfindung liegt die Aufgabe zugrunde, einen Oberleitungsstützpunkt der eingangs genannten Gattung so auszubilden, daß der erforderliche Raumbedarf minimiert wird. Damit sollen diese Oberleitungsstützpunkte auch in vorhandene eingleisige Gewölbetunnel eingesetzt werden können, die dem Lichtraumprofil eng angepaßt sind, ohne nennenswerte bautechnische Maßnahmen zu erfordern.

Diese Aufgabe wird durch die Ausbildung des Oberleitungsstützpunkts mit den in dem kennzeichnenden Teil des Anspruchs 1 angegebenen Merkmalen gelöst.

Der erfindungsgemäße Oberleitungsstützpunkt ist raumsparend, da sich seine Teile flach im wesentlichen in Richtung der Fahrdrähte über diesen und praktisch nicht quer in den Tunnel hinein erstrecken. Der erfindungsgemäße Oberleitungsstützpunkt zeichnet sich weiterhin durch verhältnismäßig leichte, einfach herzustellende Komponenten aus. Weitere Vorteile liegen in der Möglichkeit einer kardanischen Einstellung der Tragisolatoren, der Höhen-und Seitenverstellbarkeit der Fahrdrähte und damit einer Anpassung an eine große Vielzahl von Tunnelprofilen. Deswegen und wegen des geringen Raumbedarfs kann auf bautechnische Maßnahmen bei vorhandenen Tunneln weitgehend verzichtet werden. Da die sonst bei Oberleitugnsstützpunkten mit Schwenkauslegern und Seitenhaltern auftretenden Rückstellkräfte hier nicht vorhanden sind und in Tunneln üblicherweise nur ein schmaler Temperaturbereich beherrscht werden muß, können die Nachspannlängen der Fahrdrähte groß gewählt werden, so daß auf Nachspannungen im Tunnel, die Tunnelaufweitungen erfordern können, verzichtet werden kann.

Insbesondere ist nach Anspruch 2 vorteilhaft, daß die Oberleitungsstützpunkte lediglich zwei Fahrdrähte aufzunehmen haben, während auf das sonst übliche Tragseil ganz verzichtet wird. Das Tragseil wird an einer Stelle, an der es keinen Raumbedarf in dem Tunnel erfordert, nämlich vor dem Tunnel, durch einen der beiden Fahrdrähte ersetzt, die durch den Tunnel durchgeführt werden. Die nach Anspruch 1 angeordneten Tragisolatoren halten beide Fahrdrähte auf gleicher Höhe über der Schienenoberkante.

Weitere vorteilhafte Ausgestaltungen und Ausbildungen des Oberleitungsstützpunktes sind in den Ansprüchen 3 bis 25 angegeben.

Mit der Ausbildung der Kulisse gemäß Anspruch 3 wird in einfacher Weise die horizontale Lage der beiden Fahrdrähte gesichert, so daß diese unabhängig von der Verschiebung der Fahrdrähte in Längsrichtung parallel zu den Schienenoberkanten orientiert sind.

In der Variante des Oberleitungsstützpunkts nach Anspruch 4 ist die Kulisse mit den Tragisolatoren kardanisch einstellbar verbunden, die somit gegenüber den spannungsführenden Enden der Tragisolatoren feststeht. Die Fahrdrähte sind dabei mittels eines Schlittens oder Wagens gegenüber der Kulisse in deren Längsrichtung verschiebbar. - Dadurch, daß die Tragisolatoren an den beiden Stirnseiten des Rahmens kardanisch einstellbar montiert sind, an dem die Fahrdrähte über einen Schlittenwagen/Gleithänger aufgehängt sind, wird der Abstand zwischen zwei Isolatoren an ihren jeweiligen Befestigungsstellen (Basismaß) besonders klein gehalten, wodurch der für den Oberleitungsstützpunkt benötigte Freiraum entsprechend reduziert ist. Die stirnseitige Aufhängung der Isolatoren ermöglicht weiterhin eine Spreizung der Fahrdrähte an dem Oberleitungsstützpunkt selbst, wodurch ein Pendeln um die Längsachse verhindert werden kann.

Je nach der Belastung sind an je einer Stirnseite des Rahmens zwei Isolatoren symmetrisch zu der Mitte montiert oder aber nur ein Isolator ist in der Mitte der Stirnseite angebracht: Anspruch 7.

Die Fahrdrähte können über je eine Fahrdrahtklemme bzw. über eine Fahrdrahtdoppelklemme für zwei Fahrdrähte starr oder federnd montiert sein. Anspruch 8 beinhaltet eine im wesentlichen starre Befestigung und Anspruch 9 eine federnde Montage der Fahrdrahtdoppelklemme. - Durch die Verwendung einer unsymmetrischen Fahrdrahtdoppelklemme kann der Oberleitungsstützpunkt auch bestimmte Seitenzüge aufnehmen, wodurch eine Kraftkomponente nach oben vermieden wird.

Durch die in Anspruch 10 angegebene kardanische Aufhängung der Kulisse werden die Fahrdrähte in der gewünschten Lage gegenüber der Schienenoberkante eingestellt. Die Höhe der Fahrdrähte kann grob durch das parallel zur Fahrdrahtrichtung einstellbare erste Profilstück vorgegeben und durch Muttern an dem Schraubende je eines der Tragisolatoren fein eingestellt werden.

Einzelheiten der kardanischen Aufhängung, insbesondere zur Verschiebbarkeit des ersten Profilstücks sind in Anspruch 11 angegeben.

Eine zweite Variante des Oberleitungsstützpunkts weist die Merkmale des Anspruchs 12 auf. In dieser Variante stehen die Kulissen in fester Verbindung mit den Fahrdrähten, während sie gegenüber den spannungsführenden Seiten der Tragisolatoren beweglich ist. Auch hier ist durch die kardanische Einstellung der Kulisse die Höhenlage der Fahrdrähte fixiert, die sich gleichwohl in ihrer Längsrichtung gegenüber den spannungsführenden Seiten der Tragisolatoren verschieben können.

Eine unkomplizierte konstruktive Ausbildung der zweiten Variante des Oberleitungsstützpunkts ist in Anspruch 13 angegeben.

Hierbei werden die Kulissendrähte, aus denen die Kulisse besteht, an ihren Enden entsprechend Anspruch 14 nach unten gekröpft. Dadurch wird erreicht, daß die Fahrdrähte hängend über übliche Klemmbügel an die Enden der Kulissendrähte geklemmt werden können und daß gleichwohl ein genügender Abstand zwischen dem ungekröpften Teil der Kulissendrähte und den Fahrdrähten zur Verschiebung des Gleitstücks vorhanden ist, an denen die spannungsführenden Seiten der Tragisolatoren angebracht sind.

Eine einfache Ausführung des Gleitstücks, die gleichwohl eine kardanische Anbringung der spannungsführenden Seite des Tragisolators bzw. der Tragisolatoren ermöglicht, ist in Anspruch 15 angegeben.

Die geerdeten Seiten der Tragisolatoren sind dabei an der Tunnelleibung ebenfalls kardanisch einstellbar angebracht, so daß bei der Montage die jeweils günstigste Stellung der Tragisolatoren eingestellt werden kann. Durch die gespreizte Anordnung der Kulissendrähte gegenüber dem gegenseitigen Abstand der Fahrdrähte nach Anspruch 17 wird die Reibung an dem Gleitstück bzw. deren Laschen bei Längenänderungen als Folge des größeren Seitenzuges im Gleisbogen vermindert.

Die Ausbildung des Oberleitungsstützpunktes nach Anspruch 19 dient dazu, das auf die Führungslaschen ausgeübte Moment, welches bei Aufnahme der Seitenzüge der Fahrdrähte auftritt, möglichst gering zu halten. Hierzu werden die Bohrungen zur Aufnahme der beiden Kulissenrohre, je nach Seitenzug, ausgewählt.

Dem gleichen Ziel, das Moment klein zu halten, dient die Verkürzung des Hebelarms, mit dem die resultierende Kraft von den Fahrdrähten an den Bügelträgern angreift, nach Anspruch 20.

Durch die Ausbildung der Fahrdrahtaufhängung nach Anspruch 21, bei der die nach den Ansprüchen 19 und 20 vorgesehenen Klemmbügel durch Beidrahtklemmen ersetzt sind und bei der U-förmig gebogene Beidrähte durch die Kulissenrohre gesteckt sind, kann das Moment aus Gewicht der Fahrdrähte und Seitenzug auf nahezu Null verringert werden.

Die Ausführung der Fahrdrahtaufhängung nach Anspruch 22 zeichnet sich durch besonders geringen Aufwand aus und dadurch, daß sie sowohl für ein gerades Gleis als auch im Gleisbogen verwendet werden kann.

Der erfindungsgemäße Oberleitungsstützpunkt kann unter Beibehaltung dessen Konstruktionsprinzips und der damit erreichten Vorteile als Fixpunkt im Tunnel nach Anspruch 23 ausgebildet werden. Durch das sowohl gegenüber dem Fahrdraht als auch gegenüber den spannungsführenden Seiten der Tragisolatoren festgelegte Gleitstück kann bei einseitigem Fahrdrahtriß die Zugkraft über das Gleitstück und die Kulisse sowie über die Tragisolatoren an der Tunnelleibung in das Bauwerk eingeleitet werden.

In der Variante des Oberleitungsstützpunkts mit gegenüber der Kulisse normalerweise in dessen Längsrichtung verschiebbarem Gleitstück wird dieses zur Ausbildung eines Festpunktes durch an innen anliegende Stegklemmen festgelegt, die an den länglichen Führungselementen der Kulisse angeklemmt sind. Die Kulisse wird durch Anklemmen am Fahrdraht mit einer Reihe weiterer Stegklemmen vorteilhaft kurz gehalten.

In der anderen Variante des Oberleitungsstützpunkts sind zur Ausbildung dieses Oberleitungsstützpunkts als Festpunkt die Fahrdrähte gegen Verschiebung in Längsrichtung der Kulisse durch an innen angeklemmte Doppelstegklemmen arretiert. Die oberen Klemmhälften der Doppelstegklemmen sind an jeweils einem von zwei den Fahrdrähten zugeordneten Runddrähten festgeklemmt, die an den Stirnseiten des Rahmens befestigt sind, an dem auch die Kulisse angebracht ist. Der an den Fahrdrähten angeklemmte, normalerweise auf der Kulisse verschiebbare Schlitten kann also hier keine Bewegungen mehr ausführen. Bei Fahrdrahtriß werden die Kräfte von dem Fahrdraht über die Doppelstegklemmen, den Runddraht, den Rahmen und die Tragisolatoren in die Tunnelleibung eingeleitet.

Die Fahrdrahtaufhängung kann mit den erfindungsgemäßen Oberleitungsstützpunkten weiter vorteilhaft so ausgeführt werden, daß statt der üblichen Zickzackführung die beiden Fahrdrähte eines Paars zwischen zwei Oberleitungsstützpunkten nicht parallel zueinander, sondern seitlich voneinander abgespreizt sind. Die Fahrdrähte sind allenfalls an den Oberleitungsstützpunkten zueinander parallel verlaufend aufgehängt. Zweckmäßig werden die Fahrdrähte zwischen den Oberleitungsstützpunkten durch die in Anspruch 27 angegebene, unkomplizierten Spreizen abgespreizt. Durch die gegenseitige Seitenverschiebung der Fahrdrähte (Spreizung) treten somit keine Seitenkräfte an den Oberleitungsstützpunkten auf. Im geraden Gleis können die Oberleitungsstützpunkte in einer Linie geführt werden. Diese Spreizung der Fahrdrähte eignet sich besonders für die Variante der Oberleitungsstützpunkte, bei der die Kulissen fest mit den Fahrdrähten verbunden sind, während die spannungsführende Seite der Tragisolatoren bezüglich der Kulissen beweglich sind.

Die Erfindung wird im folgenden anhand einer Zeichnung mit 21 Figuren näher erläutert. Es zeigen:

Fig. 1a einen Oberleitungsstützpunkt mit einer gegenüber Tragisolatoren (spannungsführende Seite) feststehenden Kulisse, die gegenüber den Fahrdrähten beweglich ist, und einem Schlitten mit Fahrdrahtdoppelklemme für zwei Fahrdrähte in einer Seitenansicht,

Fig. 1b den Oberleitungsstützpunkt nach Fig. 1a in einer Draufsicht,

Fig. 2a eine Einzelheit einesOberleitungsstützpunkts im wesentlichen nach Fig. 1a, insbesondere eine kardanische Isolatorbefestigung an einem Rahmen,

Fig. 2b die Einzelheit nach Fig. 2a in einer Draufsicht,

Fig. 2c einen Querschnitt entlang der Schnittlinie A-A in Fig. 2a,

Fig. 3a eine weitere Einzelheit des Oberleitungsstützpunkts nach Fig. 1a, nämlich eine kardanische und verstellbare Aufhängung eines Tragisolators an einer Tunnelleibung,

Fig. 3b die Aufhängung nach Fig. 3a in einer Draufsicht,

Fig. 4a eine erste Variante des Oberleitungsstützpunkts mit einer gegenüber Tragisolatoren (spannungsführende Seite) beweglichen Kulisse, die fest mit Fahrdrähten verbunden ist, in einem Längsschnitt,

Fig. 4b den Oberleitungsstützpunkt nach Fig. 4a in einer Ansicht auf die Stirnseite,

Fig. 5 einen Oberleitungsstützpunkt als Abwandlung des Oberleitungsstützpunkts nach Fig. 4b mit gespreizter Kulisse in einer Ansicht auf die Stirnseite,

Fig. 6a einen Oberleitungsstützpunkt in Abwandlung eines Oberleitungsstützpunkts nach Fig. 4b mit verkleinerten Seitenhaltern und Zwischenklemmstück in einer Ansicht auf die Stirnseite,

Fig. 6b den Oberleitungsstützpunkt nach Fig. 6a in einem Teil-Längsschnitt entlang der Schnittlinie B-B in Fig. 6a,

Fig. 7 eine Ausführungsform des Oberleitungsstützpunkts der ersten Variante nach Fig. 4a, jedoch mit Beidrahtklemmen in einer Stirnansicht,

Fig. 8 eine Ausführungsform des Oberleitungsstützpunkts nach Fig. 4a mit gerader Kulisse zur Verwendung im geraden Gleis und im Gleisbogen, in einer Ansicht auf die Stirnseite,

Fig. 9a eine Ausführung des Oberleitungsstützpunkts ähnlich Fig. 4a, jedoch als Festpunkt, verwendbar im geraden Gleis und im Gleisbogen, in einer Ansicht auf die Stirnseite,

Fig. 9b den Oberleitungsstützpunkt nach Fig. 9a in einem Längsschnitt entlang der Schnittlinie C-C in Fig. 9a,

Fig. 10 eine Ausführung des Oberleitungsstützpunkts nach den Fig. 1a und 2a als Festpunkt in einer Teil-Seitenansicht,

Fig. 11a eine Seitenverschiebung der Fahrdrähte im geraden Gleis in einer Draufsicht,

Fig. 11b eine Seitenverschiebung der Fahrdrähte im Gleisbogen, ebenfalls in einer Draufsicht,

Fig. 12a eine Spreize zur Seitenverschiebung der Fahrdrähte in einer Ansicht auf die Stirnseite und

Fig. 12b eine Spreize zur Seitenverschiebung der Fahrdrähte in einer Ansicht auf die Stirnseite.

In den Figuren sind die Oberleitungsstützpunkte sowie die mit ihnen aufgebaute Fahrdrahtaufhängung in zum Teil unterschiedlichen Maßstäben verkleinert dargestellt.

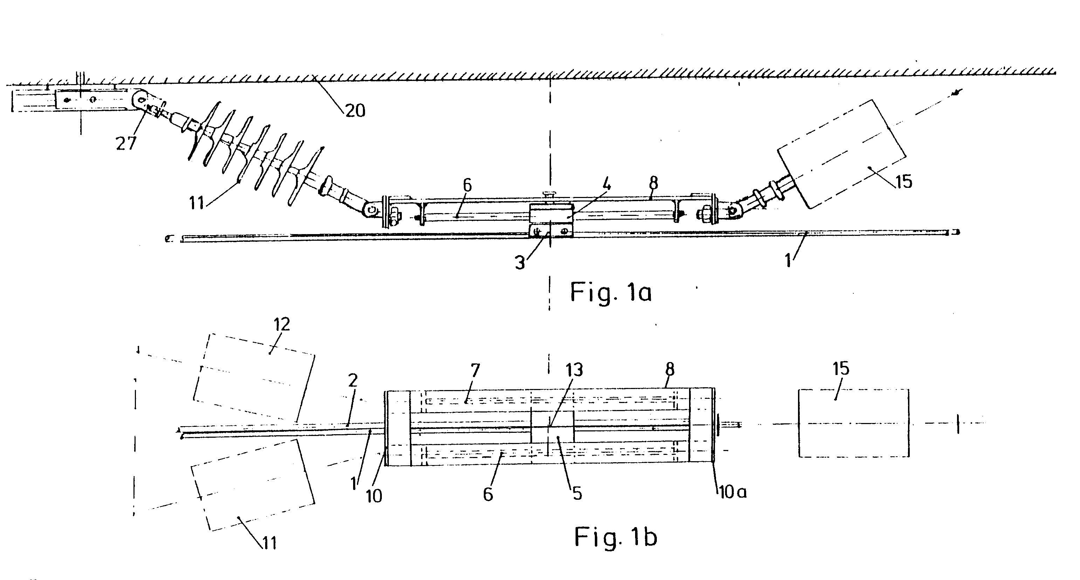

In den Figuren 1a und 1b werden zwei horizontal nebeneinanderliegende Fahrdrähte 1 und 2 in ihrer Längsrichtung beweglich von einem Oberleitungsstützpunkt gehalten.

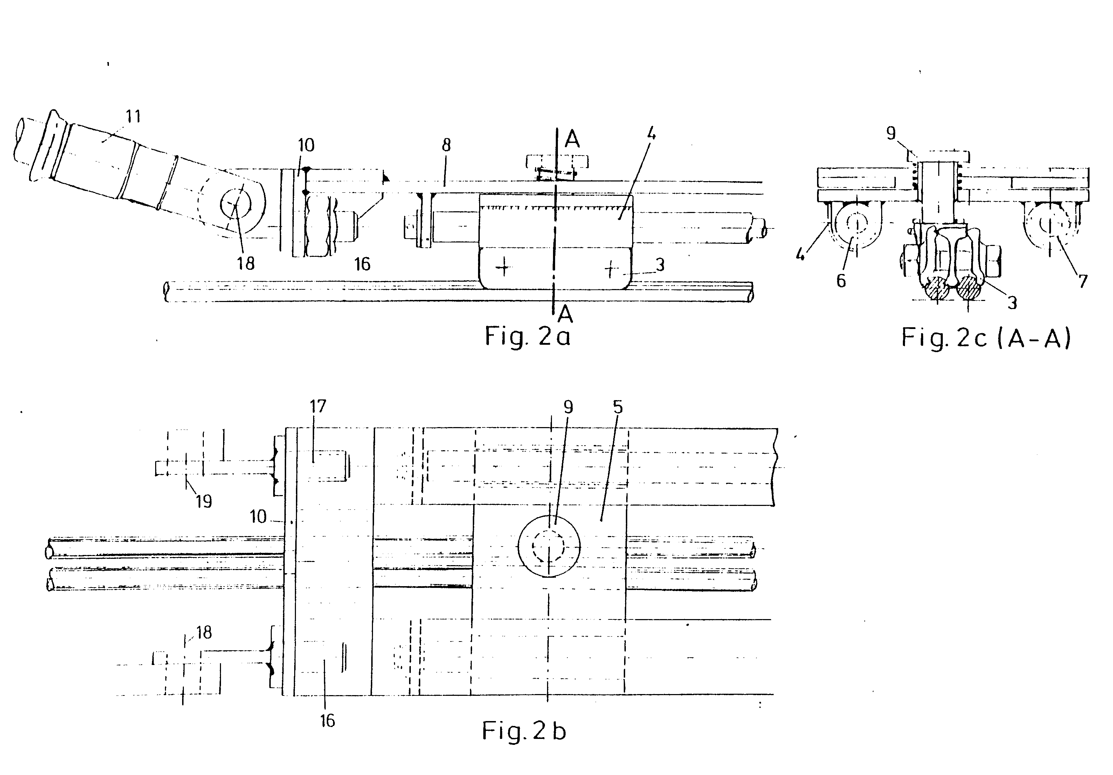

Hierzu sind die beiden Fahrdrähte an einer Fahrdrahtdoppelklemme 3 gefaßt, die mit einem zusammen mit den Fahrdrähten verschiebbaren Schlitten 4 in Verbindung steht. Die Fahrdrahtdoppelklemme mit einem Verbindungssteg 5 des Schlittens drehbar montiert. Der Schlitten ist gleitbeweglich auf einer Kulisse angeordnet, die hier aus zwei in festem Abstand nebeneinander angeordneten Führungsrohren 6 und 7 besteht. Die Führungsrohre sind, wie am besten aus Fig. 1a ersichtlich, an einem Rahmen 8 befestigt. Einzelheiten der Lagerung des Schlittens 4 auf den Führungsrohren 6 und 7 können aus Fig. 2c entnommen werden. - Wie der Schlitten im einzelnen aufgebaut ist, kann aus Fig. 2c entnommen werden. Es ist hierin erkennbar, wie der Schlitten die beiden Führungsrohre 6 und 7 umgreift und auf diesen aufliegt.

In der Variante nach Fig. 2c ist die Fahrdrahtdoppelklemme 3 mittels eines Bolzens 9 federnd an dem Schlitten angebracht, wobei die Feder der Schwerkraft auf die Fahrdrähte entgegenwirkt.

Anstelle des Schlittens kann auch ein Wagen mit Rädern vorgesehen sein, die in C-Schienen anstelle der Führungsrohre abrollen können und hierin geführt sind. Auch können Gleithänger/Pendelgleithänger verwendet werden, die auf ein/zwei Rollen gleiten.

Der Rahmen 8 wird von Tragisolatoren getragen: Gemäß Fig. 1b sind an der linken Stirnseite 10 des Rahmens zwei Tragisolatoren 11 und 12 im Abstand zueinander und zu einer mittleren Längsachse 13 spiegelbildlich schräg montiert. Auf der gegenüberliegenden äußeren Stirnseite 14 ist hingegen nur ein Tragisolator 15 in der mittleren Längsachse angeordnet. Die Anzahl der verwendeten Tragisolatoren richtet sich dabei nach deren Zugbelastung.

Einzelheiten, wie die beiden Tragisolatoren 11 und 12 an der Stirnseite 10 kardanisch gelagert sind, gehen aus den Fig. 2a und 2b hervor. Danach ist für jeden Tragisolator in die Stirnseite 10 ein Lagerbolzen eingeführt, der in einer gewünschten Drehlage verschraubt werden kann. Jeweils eine spannungsführende Seite eines der Tragisolatoren ist rechtwinklig zu der Drehachse des Lagerbolzens in der Stirnseite um eine Querachse 18 bzw. 19 - schwenkbar. Die spannungsführende Seite kann jeweils durch Verschraubung in einer Schwenklage fixiert werden.

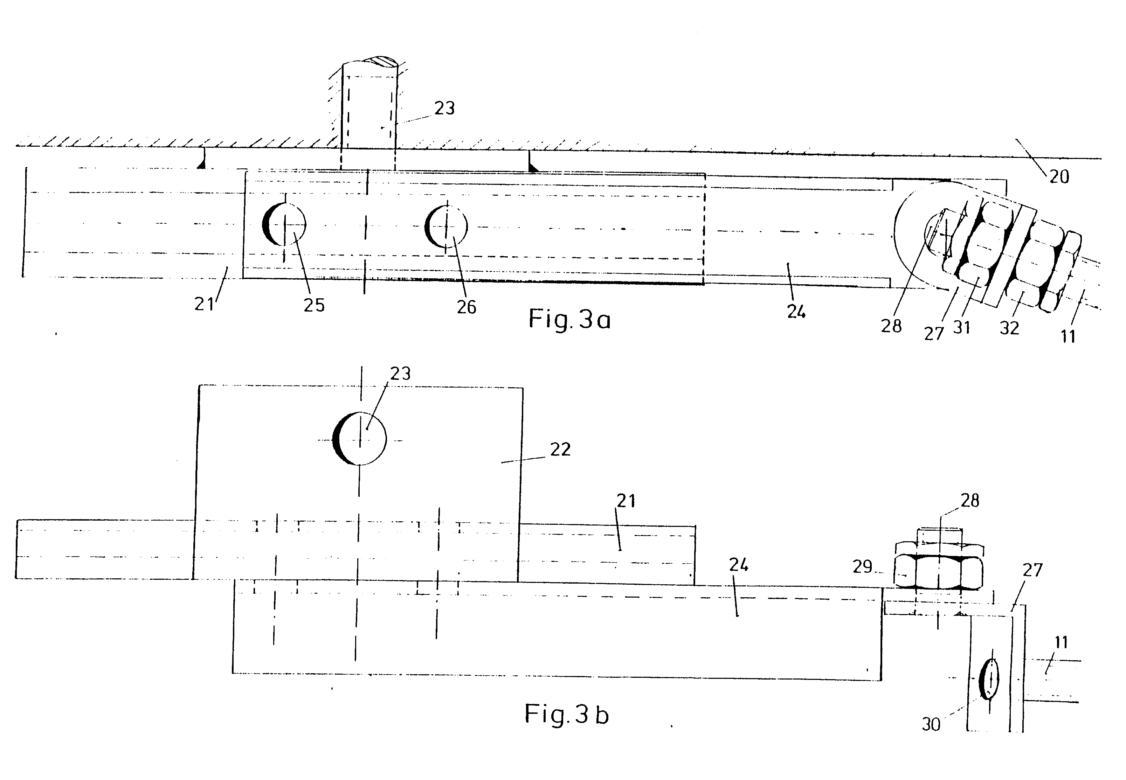

In den Fig. 3a und 3b ist die kardanische Aufhängung des Rahmens 8 der Kulisse an der geerdeten Seite eines der Tragisolatoren 11 an der Tunnelleibung 20 dargestellt. Diese Aufhängung besteht im wesentlichen aus einer Ankerschiene 21, die über einen an einer Grundplatte 22 befestigten Tragbolzen 23 an der Tunnelleibung befestigt werden kann, und zwar so, daß die Drehachse des Tragbolzens senkrecht gerichtet ist. Entlang der Ankerschiene 21 ist ein U-Profil 24 als erstes Profilstück verschiebbar vorgesehen. Das U-Profil kann in einer beliebigen Verschiebestellung gegenüber der Ankerschiene mit Schrauben fixiert werden, die durch Bohrungen 25, 26 hindurchreichen, aber im einzelnen nicht dargestellt sind. Als zweites Profilstück ist an einem Ende des U-Profils ein Winkelprofil 27 gelagert, und zwar um eine Querachse 28 in der Horizontalen schwenkbar. Das Winkelprofil kann in einer eingestellten Schwenkstellung mit einer Mutter 29 fixiert werden. In eine Bohrung 30 des Winkelprofils ist eine geerdete Seite des Tragisolators 11 drehbar eingesteckt. Die geerdete Seite kann in einer gewünschten Drehlage durch Muttern 31, 32 festgelegt werden. Die Drehachse des Tragisolators ist dabei nach unten geneigt - siehe auch Fig. 1a - und annähernd rechtwinklig zu der Drehachse des Tragbolzens 23 und der Querachse 28. Die Höhe der Fahrdrähte 1 und 2 läßt sich durch Verschiebung des U-Profils 24 gegenüber der Ankerschiene 21 grob und fein durch die Muttern 31, 32 an der geerdeten Seite des Tragisolators einstellen. - Es wird noch bemerkt, daß die Ankerschiene ein annähernd kastenförmiges, auf der Vorderseite in Fig. 3a einen Längsschlitz aufweisendes Profil hat. Köpfe von Befestigungsschrauben, die durch die Bohrungen 25, 26 des U-Profils ragen, stützen sich in dem Profil hinter dem Längsschlitz 23 ab.

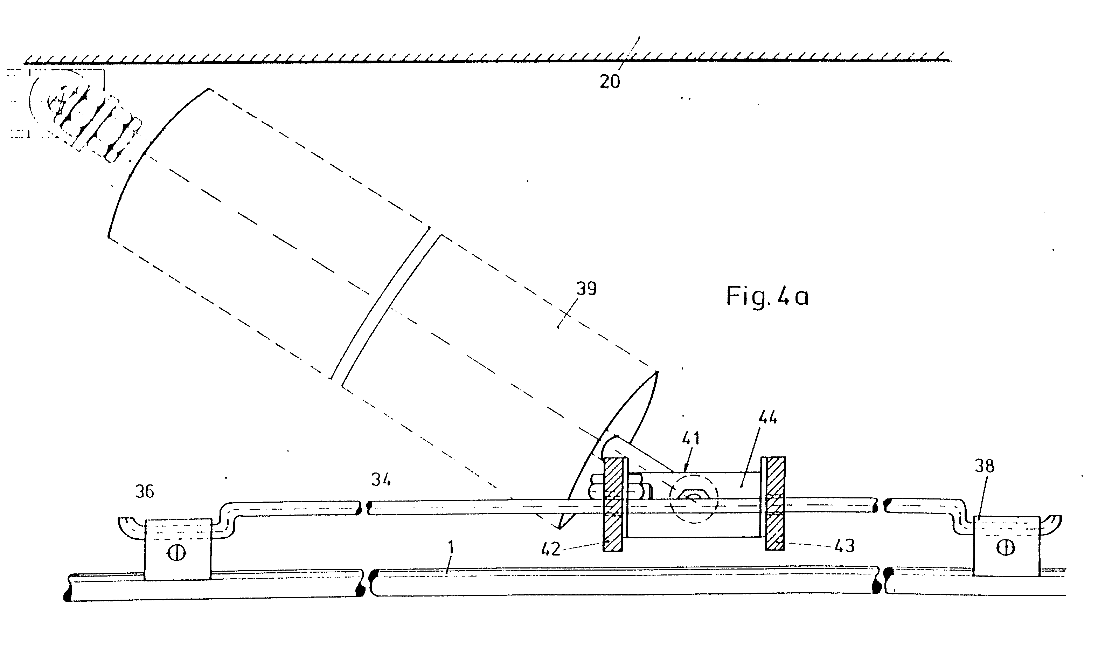

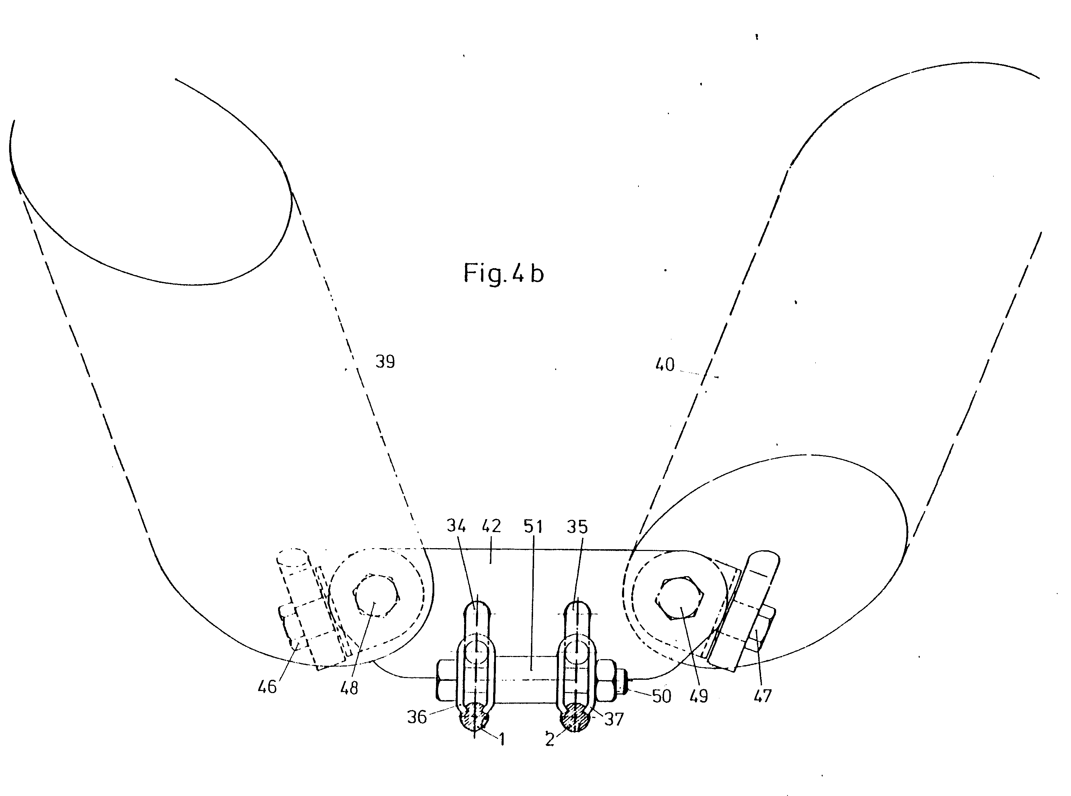

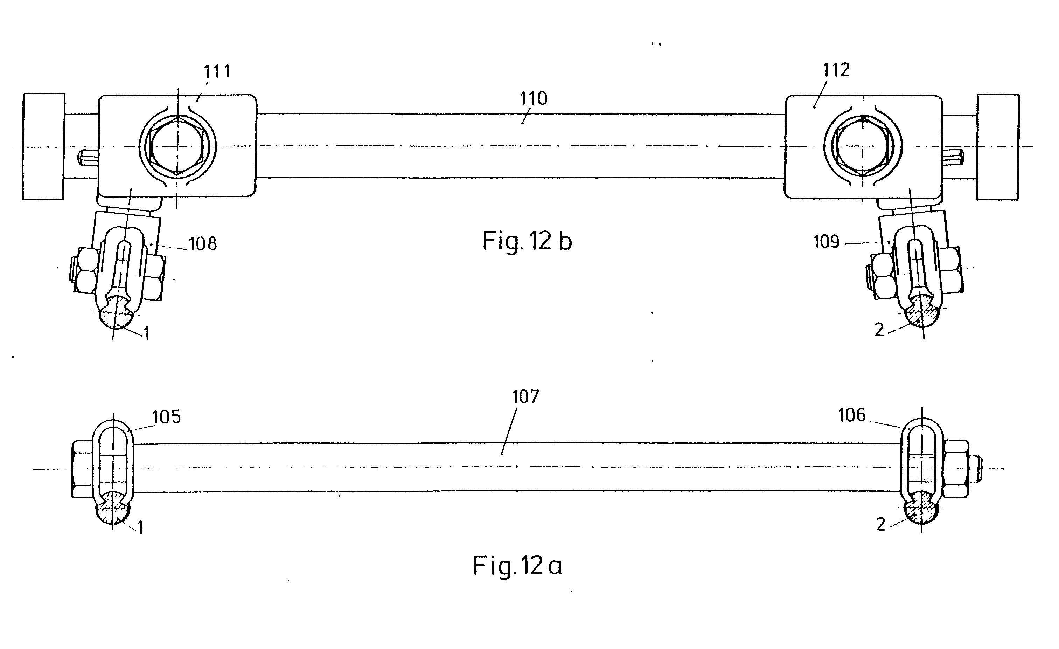

In den Figuren 4a und 4b ist eine andere Variante des Oberleitungsstützpunkts dargestellt, der bei minimalem Raumaufwand eine Längsverschiebbarkeit der Fahrdrähte 1 und 2 gewährleistet: Bei dieser Ausführungsform besteht die Kulisse aus zwei Kulissendrähten 34 und 35, deren Enden nach unten gekröpft sind. Jedes gekröpfte Ende ist mittels eines Klemmbügels 36 bzw. 37 bzw. 38 mit einem der beiden Fahrdrähte 1, 2 unverschiebbar verbunden. Zur Längsverschiebung der spannungsführenden Seiten von Tragisolatoren 39, 40 sind diese an einem Gleitstück 41, welches auf den Kulissendrähten 34, 35 verschoben werden kann, kardanisch einstellbar angebracht. Dadurch werden die Fahrdrähte in ihrer Höhenlage fixiert. Auf den üblichen bekannten Zickzack der Fahrdrähte kann verzichtet werden, wenn zwischen den Stützpunkten Fahrdrahtspreizen gemäß Figuren 12a und 12b vorgesehen werden.

Das Gleitstück besteht im einzelnen aus zwei Laschen 42, 43, durch welche die Kulissendrähte geführt sind, sowie aus die Laschen miteinander verbindende Abstandseisen 44, 45, von denen das Abstandseisen 44 in Fig. 4a sichtbar ist. Die spannungsführende Seite je eines Isolators ist an je einem Abstandseisen schwenkbar, jedoch in einer Schwenklage festschraubbar - Schraube 46 bzw. 47. Senkrecht zu dieser Schwenkachse läßt sich das Abstandseisen um eine parallel zu den Fahrdrähten bzw. Kulissendrähten liegende Achse drehen und ebenfalls durch eine Schraube - Schraube 48 bzw. 49 - feststellen. Die geerdete Seite jedes Tragisolators 39 bzw. 40 kann mit einer Isolatoraufhängung gemäß den Fig. 3a und 3b ebenfalls kardanisch an der Tunnelleibung aufgehängt werden, so daß bei der Montage die jeweils günstigste Stellung der Tragisolatoren einstellbar ist.

In der Ausführungsform nach den Figuren 4a und 4b werden jeweils zwei benachbarte Klemmbügel, z.B. 36, 37 durch einen Schraubbolzen 50 unter Einschluß eines Distanzstücks 51 zusammengepreßt.

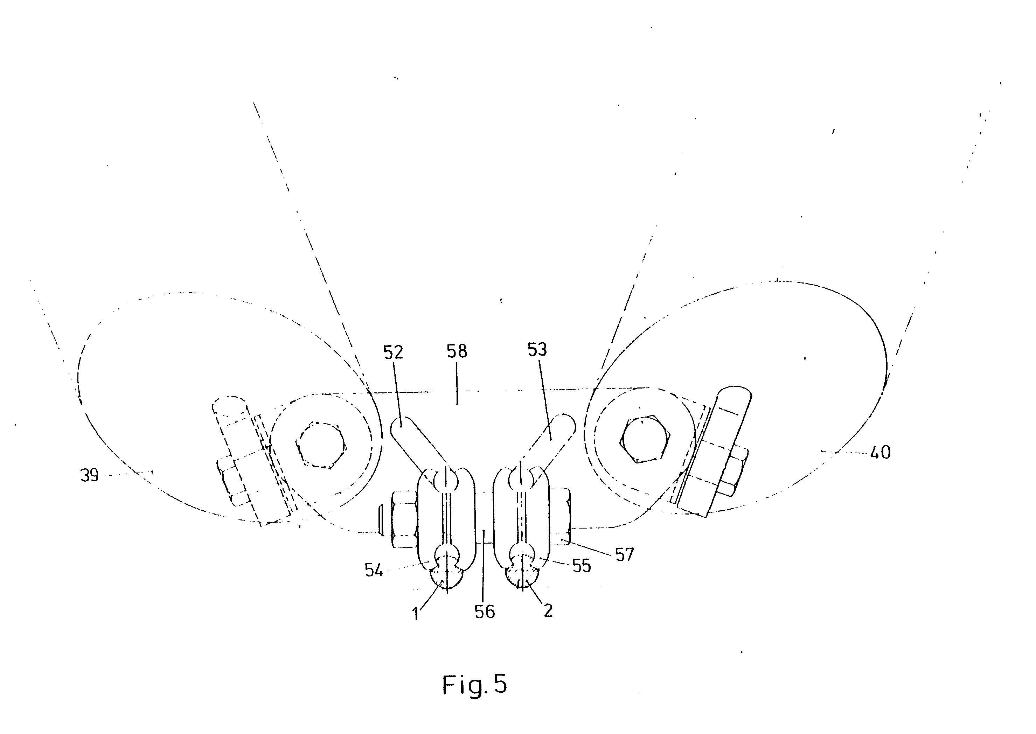

Die in Fig. 5 gezeigte Ausführungsform des Oberleitungsstützpunkts unterscheidet sich davon insofern, als hier Kulissendrähte 52, 53 in Stegklemmen 54, 55 fest eingespannt und gespreizt angeordnet sind. Die unteren Hälften der Stegklemmen 54, 55 klemmen auch hier je einen Fahrdraht 1 bzw. 2 fest. Zwischen den Stegklemmen ist ein kurzes Distanzstück 56 angeordnet. Der Klemmdruck wird durch einen durch die Stegklemmen und das zwischen ihnen liegende Distanzstück hindurchreichenden Schraubbolzen 57 erzeugt. Der Abstand der Chassisdrähte 52, 53 an den Durchführungsstellen durch die Laschen, gezeigt ist eine der Laschen 58, ist größer als der Abstand der unteren abgekröpften Enden der Kulissendrähte, die wiederum gleich dem Abstand der Fahrdrähte ist. Durch den größeren Abstand der Distanzdrähte in den Durchführungen - auch Basismaß genannt - wird die Reibung der Kulissendrähte bei Längenänderungen als Folge eines Seitenzuges im Gleisbogen vermindert. - Bei größeren Seitenkräften kann auf der Zugseite des Oberleitungsstützpunktes ein weiterer Tragisolator erforderlich sein.

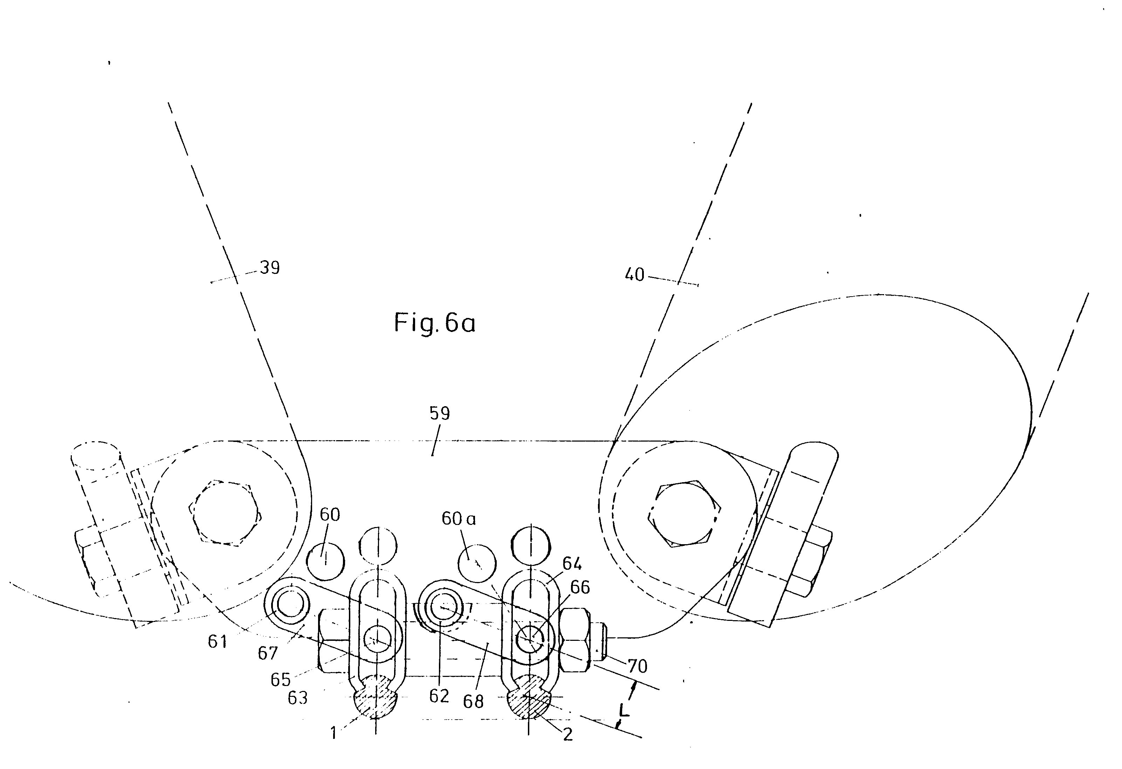

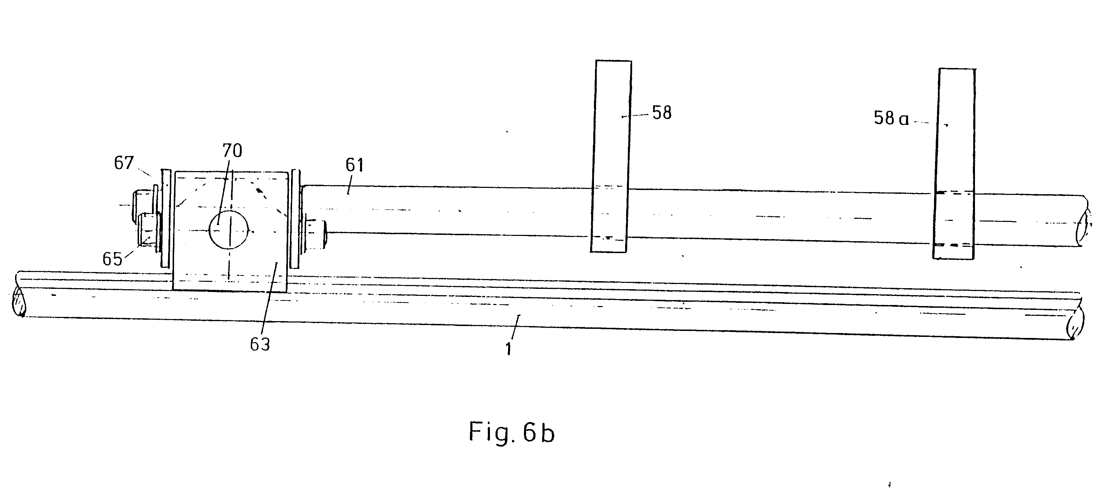

In der Ausführungsform des Oberleitungsstützpunkts nach den Fig. 6a und 6b sind die Stirnseiten des Gleitstücks, die auch hier durch Laschen 59 realisiert sein können, zur Aufnahme von Seitenzügen mit zwei im Abstand zueinander angeordneten Reihen von Bohrungen 60, 61 ausgestattet. Durch je eine von zwei parallel liegenden Bohrungen kann auswählbar je ein Kulissenrohr 61 bzw. 62 gesteckt werden. Das Paar Kulissenrohre bildet dabei wiederum die Kulisse. Jedes Ende eines Kulissenrohrs steht über einen Klemmbügel 63 bzw. 64 mit einem angeklemmten Fahrdraht 1 bzw. 2 in Verbindung. Hierzu sind in den Klemmbügeln gekrümmte -siehe strichpunktierte Linie in Fig. 6b - Bügelträger 65, 66 eingeklemmt, deren beiderseitigen Enden über Seitenhalterbleche - gezeigt sind Seitenhalterbleche 67, 68 -an je einem der Kulissenrohre angebracht sind. Ein Schraubbolzen 70 preßt die Klemmbügel unter Einschluß eines Distanzstücks 71 zusammen.

Die Kulissenrohre 61, 62 werden in solche Bohrungen der Laschen eingeführt, daß das durch den Seitenzug und das Gewicht der Fahrdrähte auf den Oberleitungsstützpunkt ausgeübte Moment entsprechend dem in Fig. 6a eingezeichneten Hebelarm L minimiert wird. Hierzu trägt außerdem bei, daß der Abstand zwischen den Fahrdrähten und den Ansatzstellen der Seitenhalterbleche an den Bügelträgern klein sind. Die Fahrdrähte werden durch in der Zeichnung nicht dargestellte Verschraubungen an den Enden der Klemmbügel und der Kulissenrohre, welche die Seitenhalterbleche fixieren, in ihrer Lage gehalten. Auch hier kann zur Aufnahme eines Seitenzuges auf der Zugseite ein weiterer Tragisolator vorgesehen sein.

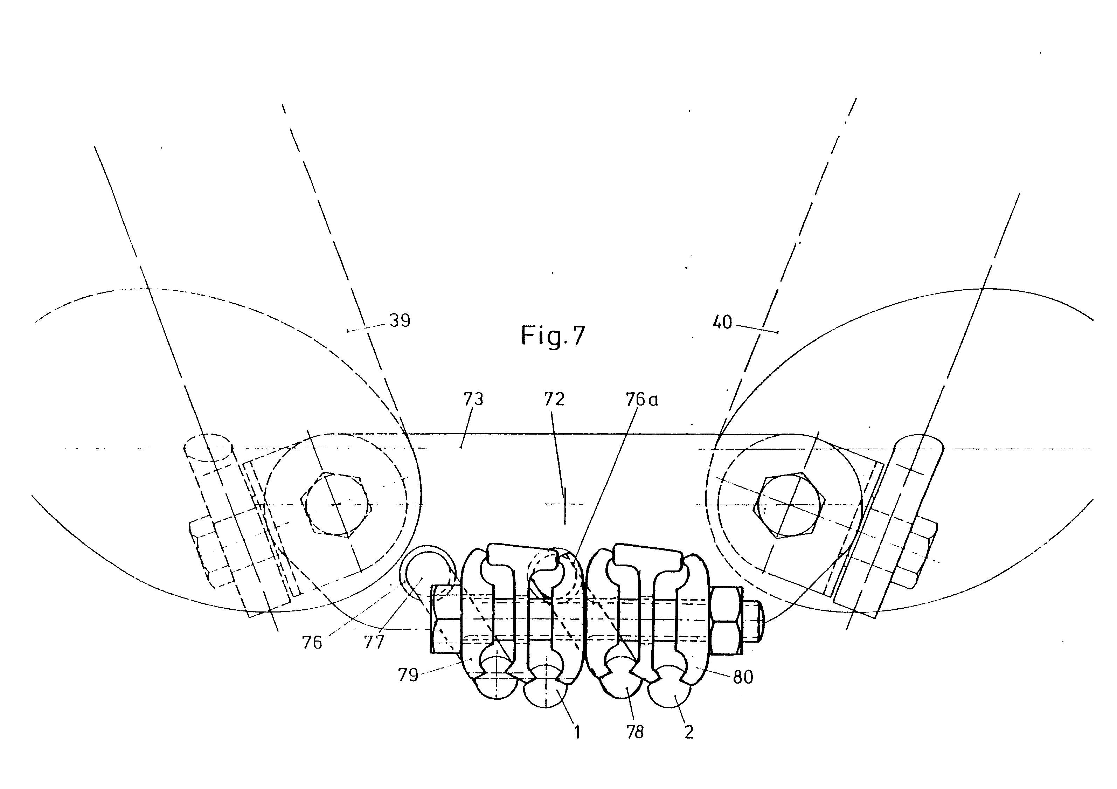

Die Ausführungsform des Oberleitungsstützpunkts nach Fig. 7 unterscheidet sich von der vorangehend beschriebenen Ausführungsform dadurch, daß statt der beiden Reihen von Bohrungen nur ein Bohrungspaar gegenüber einer mittleren Längsachse 72 auf der Stirnseite des Gleitstücks bzw. dessen Lasche 73 seitlich versetzt angeordnet sind. Jede der beiden Bohrungen nimmt ein Kulissenrohr 76 bzw. 76a auf, durch welches ein U-förmig gebogener Beidraht 77 bzw. 78 gesteckt und arretiert ist. Je ein unteres Ende des Beidrahts und einer der beiden Fahrdrähte 1 bzw. 2 werden durch den unteren Teil je einer Beidrahtklemme dicht nebeneinander und in der Höhe gestaffelt festgeklemmt. Infolge dieser Anordnung wird das Moment aus Gewicht und Seitenzug der Fahrdrähte annähernd Null.

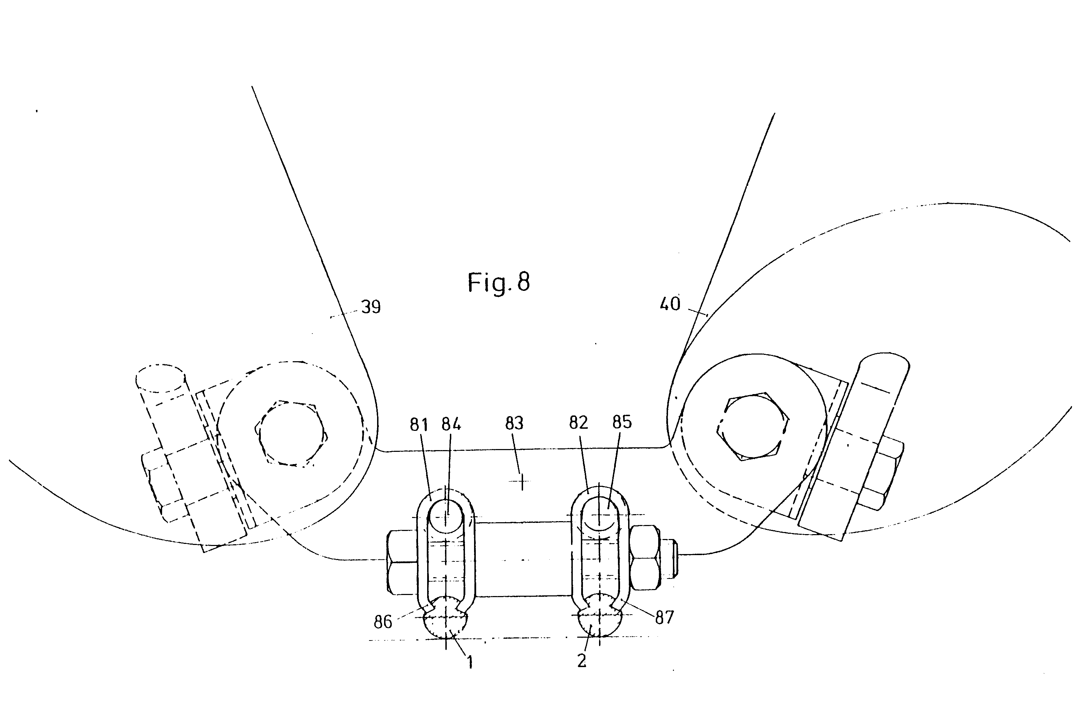

In der Ausführungsform des Oberleitungsstützpunkts nach Fig. 8 werden in zwei parallel nebeneinanderliegende Kulissenrohre 81, 82, die symmetrisch zu einer mittleren Längsachse 83 angeordnet sind, Gewindestangen 84, 85 eingeführt. Die Kulissenrohre sind mit Klemmbügeln 86, 87 verschraubt. Diese Ausführungsform kann sowohl für eine gerade Gleisführung als auch im Gleisbogen eingesetzt werden.

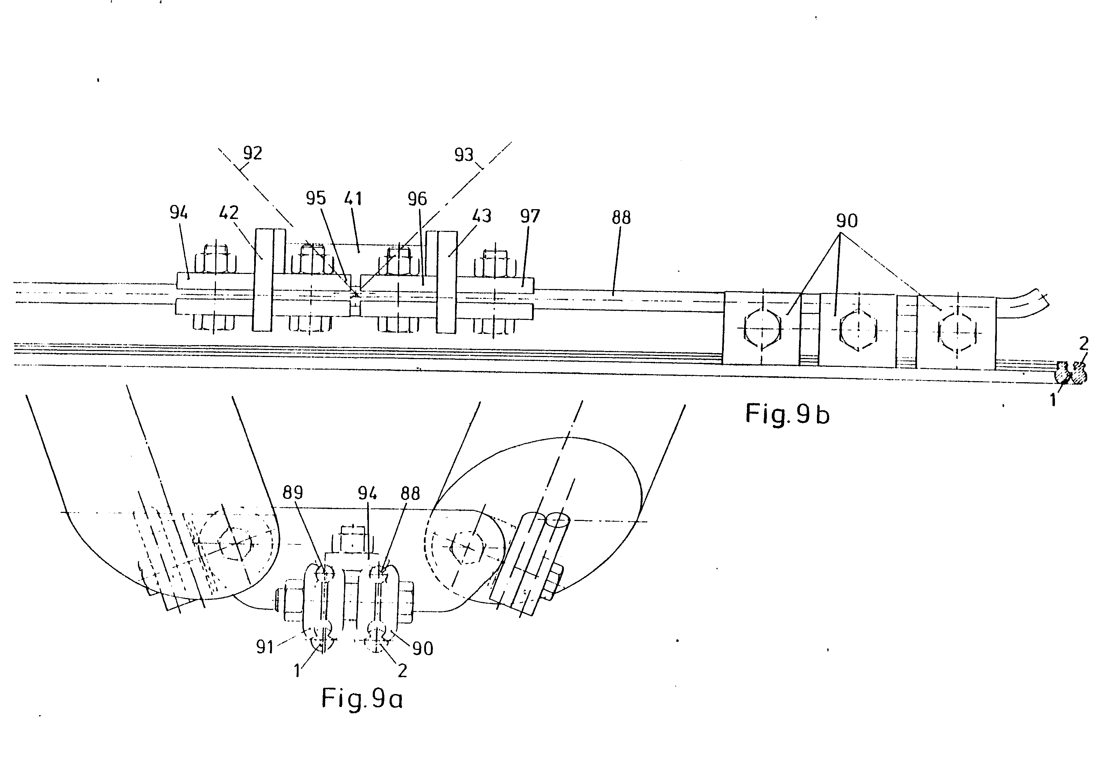

In den Fig. 9a und 9b ist eine Abwandlung des Oberleitungsstützpunkts in der Bauart nach den Fig. 4a und 4b als Festpunkt dargestellt. Dabei sind allerdings die Kulissendrähte 88, 89 an ihren Enden nicht nach unten abgekröpft. Die Kulissendrähte sind in ihren Endbereichen über Stegklemmen 90 an die Fahrdrähte 1 und 2 angeklemmt. Um das Gleitstück 41 festzulegen, an dem die Tragisolatoren kardanisch angebracht sind - dies ist durch die unter brochenen Linien 92 und 93 nur grob schematisch angedeutet -schließen sich an Laschen 42, 43 des Gleitstücks beidseitig weitere Stegklemmen 94, 95, 96 und 97 an, die horizontal an den beiden Kulissendrähten angeklemmt sind. Dadurch kann bei einseitigem Fahrdrahtriß die Zugkraft über das fixierte Schiebestück und die Tragisolatoren in die Tunnelleibung eingeleitet werden. Die freie Länge der Kulissendrähte ist durch die Reihen Stegklemmen 90 hier in vorteilhafter Weise verkürzt. Hingegen kann bei der Ausführung der Oberleitungsstützpunkte mit gleitbeweglichem Schiebestück, insbesondere nach den Fig. 4a und 4b eine gewisse Elastizität des Oberleitungsstützpunkts wünschenswert sein.

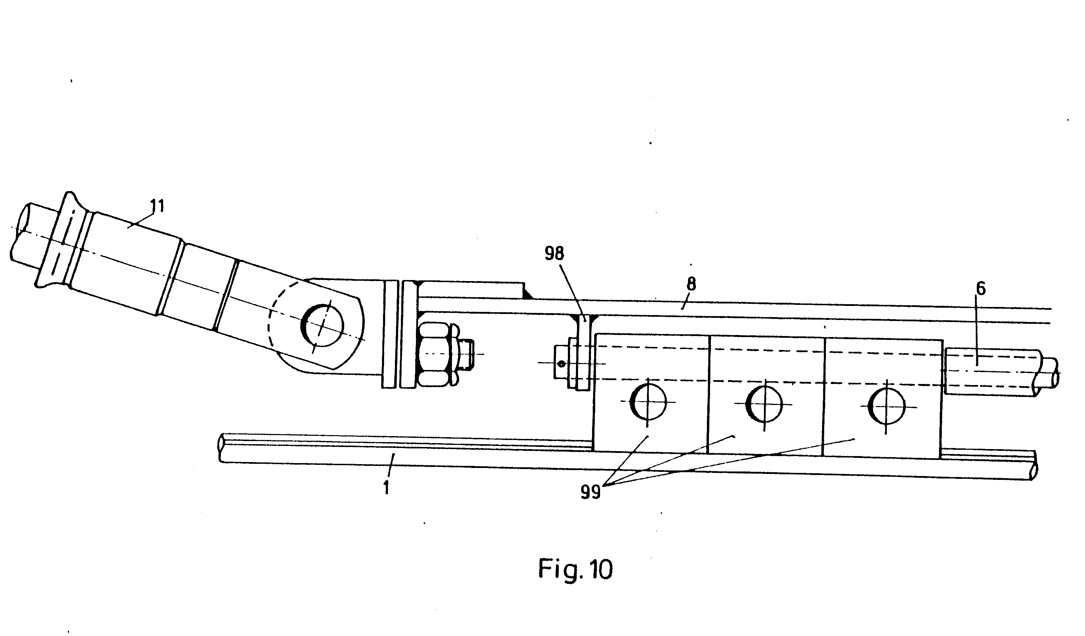

Die Ausführungsform eines Oberleitungsstützpunkts als Festpunkt gemäß Fig. 10 geht hingegen von der Konstruktion nach den Fig. 1a, 1b, 2a - 2c aus, bei denen die Fahrdrähte 1, 2 gegenüber den Kulissendrähten in Längsrichtung verschiebbar sind. Jedoch wird zur Umwandlung solcher Oberleitungsstützpunkte in Festpunkte jeweils die beiden Fahrdrähte, von denen der Fahrdraht 1 in Fig. 10 sichtbar ist, durch jeweils drei hintereinander angeordnete Doppelstegklemmen gegenüber der Kulisse festgelegt. Hierzu sind die oberen Hälften der Doppelstegklemmen jeder Reihe an Runddrähte geklemmt, die an Quereisen 98 fest verankert sind. Die in Fig. 10 sichtbare Reihe Doppelstegklemmen ist mit 99 bezeichnet. Sie fixiert zusammen mit einer ähnlichen Reihe an dem entgegengesetzten inneren Ende des Rahmens 8 den Fahrdraht 1. Zwei neben diesen Reihen angeordnete weitere Reihen Doppelstegklemmen fixieren in gleicher Weise den zweiten Fahrdraht in Verbindung mit einem weiteren an den Quereisen 98 befestigten Runddraht. Obwohl die Fahrdrähte nach wie vor an einem Schlitten 4 aufgehängt sind, kann dieser infolge der Reihen Doppelstegklemmen keine Bewegung in Längsrichtung mehr durchführen. Bei Fahrdrahtriß werden die Kräfte von dem Fahrdraht/den Fahrdrähten über die Stegklemme/Doppelstegklemmen, die Runddrähte, die Quereisen und die Tragisolatoren in die Tunnelleibung eingeleitet.

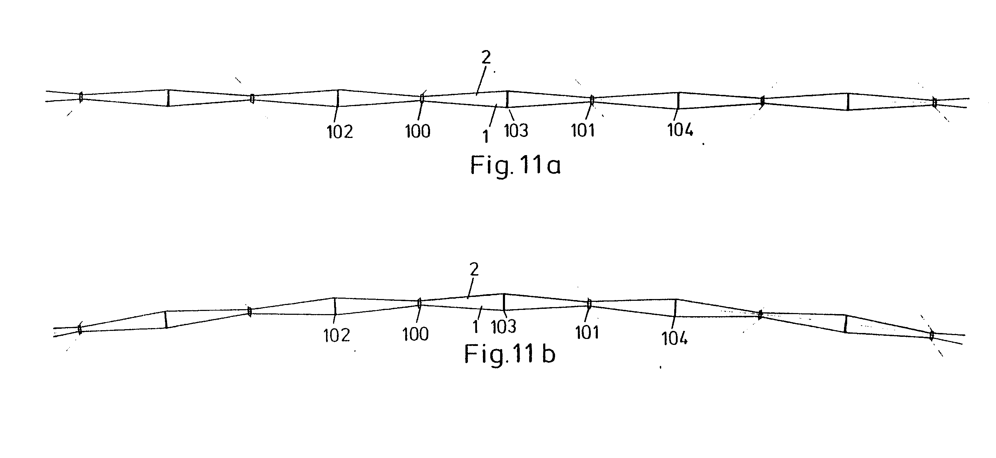

In den Fig. 11a und 11b ist dargestellt, wie Fahrdrahtaufhängungen unter Verwendung der besprochenen Oberleitungsstützpunkte aufgebaut werden können, ohne die sonst übliche Zickzackführung mit Seitenhaltern zu erfordern, damit die Schleifleiste der Stromabnehmer in der gewünschten Weise durch die Fahrdrähte bestrichen werden. Gemäß Fig. 11 wird eine Seitenverschiebung der Fahrdrähte 1 und 2 dadurch erreicht, daß diese etwa in der Mitte zwischen zwei Oberleitungsstützpunkten, beispielsweise 100, 101 voneinander abgespreizt werden. Hierzu dienen Spreizen 102 - 104, welche die Spreizkräfte der Fahrdrähte aufnehmen.

Während Fig. 11a die Fahrdrahtaufhängung im geraden Gleisstück darstellt, ist die Fahrdrahtaufhängung im Gleisbogen in Fig. 11b gezeigt. Entsprechende Teile tragen hier die gleichen Bezugszeichen. Die Geometrie der Anordnung ergibt sich aus der einfachen Darstellung in Fig. 11b.

Die Fig. 12a und 12b zeigen Stirnansichten auf zwei Ausführungsformen der Spreizen. In Fig. 12a sind Klemmbügel 105, 106 an entgegengesetzten Enden eines Distanzrohrs 107 angeschraubt. In Fig. 12b sind statt der lotrecht orientierten Klemmbügel nach außen schräg geneigte Seitenhalterklemmen 108, 109 an den Enden eines Distanzrohrs 110 angebracht, und zwar jeweils über einen Klemmenhalter 111 bzw. 112. Damit läßt sich der gegenseitige Abstand der Seitenhalterklemmen 108, 109 auf dem Distanzrohr einstellen.

## Ansprüche

1. Oberleitungsstützpunkt insbesondere zur Anbringung in eingleisigen Tunneln für oberleitungsgespeiste elektrische Triebfahrzeuge, mit dem wenigstens ein Fahrdraht über zum Teil begrenzt bewegliche Tragelemente und Isolatoren an einer Tunnelleibung abstützbar ist,
**dadurch gekennzeichnet,**
daß ein Paar Fahrdrähte (1, 2) über eine parallel zu ihnen angeordnete Kulisse (z.B. 6, 7; 34, 35) an Tragisolatoren (11, 12, 15, 39, 40) aufgehängt ist, die annähernd in Längsrichtung der Kulisse zu dieser geneigt angeordnet sind und deren spannungsführende Enden in gleicher Höhe enden, und daß die Fahrdrähte parallel zur Längsrichtung der Kulisse gegenüber den spannungsführenden Enden der Tragisolatoren verschiebbar sind.

2. Oberleitungsstützpunkt nach Anspruch 1, **dadurch gekennzeichnet,** daß einer der beiden Fahrdrähte (1, 2) des Paars eine Fortführung eines vor dem Tunnel auf Fahrdrahthöhe durch diesen Fahrdraht ersetzten Tragseiles darstellt und daß das Paar Fahrdrähte unter Verzicht auf das Tragseil aufgehängt ist.

3. Oberleitungsstützpunkt nach Anspruch 1 oder 2, **dadurch gekennzeichnet,** daß die Kulisse (z.B. 6, 7: 34, 35) aus zwei in festem Abstand nebeneinander gehaltenen länglichen Führungselementen besteht.

4. Oberleitungsstützpunkt nach einem der Ansprüche 1-3, **dadurch gekennzeichnet,** daß die Fahrdrähte (1, 2) an einem Schlitten (4) angeklemmt sind, der auf der Kulisse (Führungsrohre 6, 7) verschiebbar ist, und daß die Kulisse an einem Rahmen (8) befestigt ist, an dessen beide Stirnseiten die Tragisolatoren (11, 12, 15) kardanisch einstellbar montiert sind.

5. Oberleitungsstützpunkt nach Anspruch 3 und 4, **dadurch gekennzeichnet,** daß die länglichen Führungselemente aus zwei Führungsrohren (6, 7) bestehen, auf denen der Schlitten (4) gleitet.

6. Oberleitungsstützpunkt nach Anspruch 3 und 4, **dadurch gekennzeichnet,** daß als längliche Führungselemente zwei C-Schienen vorgesehen sind, in denen der als Wagen ausgebildete Schlitten rollt.

7. Oberleitungsstützpunkt nach einem der Ansprüche 1 - 3, **dadurch gekennzeichnet,** daß die Fahrdrähte (1, 2) an einem Pendelgleithänger aufgehängt sind, der über einen Hängerbügel mit Gleitfutter auf einem Führungsrohr gleitet.

8. Oberleitungsstützpunkt nach Anspruch 4, **dadurch gekennzeichnet,** daß an einer der beiden Stirnseiten (10) des Rahmens zwei Tragisolatoren (11, 12) im Abstand zueinander und zu der mittleren Längsachse der Kulisse spiegelbildlich schräg montiert sind, während an der anderen der beiden Stirnseiten (10a) ein dritter Tragisolator (15) in Richtung der Längsachse der Kulisse mittig angebracht ist.

9. Oberleitungsstützpunkt nach Anspruch 4, **dadurch gekennzeichnet,** daß die Fahrdrähte (1, 2) über eine Fahrdrahtdoppelklemme (3) für zwei Fahrdrähte (1, 2) an der Unterseite des Schlittens drehbar befestigt sind.

10. Oberleitungsstützpunkt nach Anspruch 4, **dadurch gekennzeichnet,** daß die Fahrdrähte (1, 2) über eine Fahrdrahtdoppelklemme (3) für beide Fahrdrähte (1, 2) mittels eines federbelasteten Bolzens (3a) an dem Schlitten aufgehängt sind.

11. Oberleitungsstützpunkt nach Anspruch 1, **dadurch gekennzeichnet,** daß die kardanische Aufhängung der Kulisse über die Tragisolatoren (11, 12, 15) einen in die Tunnelleibung (20) annähernd senkrecht eindrehbaren Tragbolzen (23), ein bezüglich des Tragbolzens horizontal annähernd parallel zur Fahrdrahtrichtung einstellbares erstes Profilstück (U-Profil 24) und ein an dem ersten Profilstück um eine horizontale Querrichtung schwenkbar einstellbares zweites Profilstück (Winkelprofil 27) zur einstellbaren Aufnahme eines Schraubendes je eines der Tragisolatoren aufweist.

12. Oberleitungsstützpunkt nach Anspruch 11, **dadurch gekennzeichnet,** daß das erste Profilstück (U-Profil 24) in einer mit dem Tragbolzen (23) über eine Grundplatte (22) verbundenen Ankerschiene (21) verschiebbar einstellbar und fixierbar ist und daß an einem Ende des ersten Profilstückes das als Winkelprofil (27) ausgebildete zweite Profilstück um einen an ihm angebrachten Schraubbolzen (Querachse 28) - schwenkbar ist.

13. Oberleitungsstützpunkt nach den Ansprüchen 1-3, **dadurch gekennzeichnet ,** daß das Paar Fahrdrähte (1, 2) an den länglichen Führungselementen der Kulisse in einem freien Längsabstand angeklemmt sind und daß an einem auf der Kulisse zwischen den Klemmstellen verschiebbaren Gleitstück (41) jeweils die spannungsführende Seite zweier Tragisolatoren kardanisch einstellbar angebracht ist.

14. Oberleitungsstützpunkt nach Anspruch 13, **dadurch gekennzeichnet,** daß die Kulisse aus zwei Kulissendrähten (34, 35) besteht, die an jedem Kulissendrahtende über je ein Klemmelement (Klemmbügel 36, 38) an einen der beiden Fahrdrähte geklemmt sind.

15. Oberleitungsstützpunkt nach Anspruch 14, **dadurch gekennzeichnet,** daß beide Enden der Klemmdrähte an den Klemmstellen (Klemmbügel 36, 38) nach unten gekröpft sind.

16. Oberleitungsstützpunkt nach Anspruch 13, **dadurch gekennzeichnet,** daß das Gleitstück (41) zwei Laschen (42, 43) aufweist, durch die jeweils die beiden Kulissendrähte (34, 35) verschiebbar durchgeführt sind und die durch zwei Abstandsstücke (Abstandseisen 44) rahmenähnlich miteinander verbunden sind, daß die Abstandsstücke um ihre Längsachse einstellbar und an den Laschen fixierbar sind und daß die spannungsführende Seite wenigstens eines Tragisolators an je einem der Abstandsstücke (44) um eine Querachse drehbar und arretierbar ist.

17. Oberleitungsstützpunkt nach einem der Ansprüche 13-16,
**dadurch gekennzeichnet,**
daß die geerdeten Seiten der Tragisolatoren (11, 12) an der Tunnelleibung (20) kardanisch einstellbar angebracht sind.

18. Oberleitungsstützpunkt nach einem der Ansprüche 14-16,
**dadurch gekennzeichnet,**
daß die Kulissendrähte (52, 53) gegenüber dem gegenseitigen Abstand der Fahrdrähte (1, 2) gespreizt angeordnet sind.

19. Oberleitungsstützpunkt nach den Ansprüchen 14, 15 und 18,
**dadurch gekennzeichnet,**
daß die abgekröpften unteren Enden der Kulissendrähte (52, 53) in Stegklemmen (54, 55) fest eingeklemmt sind, die mit den Fahrdrähten (1, 2) verbunden sind.

20. Oberleitungsstützpunkt nach Anspruch 16,
**dadurch gekennzeichnet,**
daß das Gleitstück auf jeder Stirnseite (Lasche 59) im Abstand zueinander angeordnete Reihen von Bohrungen (60, 60a) zur Aufnahme je eines Endes der Führungselemente (Kulissenrohre 61, 62) aufweist, die auf je einem zu einer mittleren Längsachse (59a) des Gleitstücks seitlich versetzten Kreisbogenabschnitt liegen, daß durch zwei ausgewählte, auf gleicher Höhe liegende Bohrungen der beiden Reihen die Führungselemente über die Laschen des Gleitstücks beidseitig herausragen und daß an die herausragenden Enden Seitenhalter (Seitenhalterbleche 67, 68) eingehängt sind, die über je einen Bügelträger (65, 66) und einen Klemmbügel (63, 64) mit einem der beiden Fahrdrähte (1, 2) verbunden ist.

21. Oberleitungsstützpunkt nach Anspruch 20,
**dadurch gekennzeichnet,**
daß die Seitenhalter etwa in der Mitte der Klemmbügel (63, 64) an den Bügelträgern (65, 66) angebracht sind, die von den Klemmbügeln eingeschlossen werden.

22. Oberleitungsstützpunkt nach Anspruch 13,
**dadurch gekennzeichnet,**
daß das Gleitstück auf jeder Stirnseite (Lasche 73) wenigstens zwei im Abstand zueinander angeordnete und zu einer mittleren Längsachse seitlich versetzte Bohrungen aufweist, daß von den Bohrungen zwei parallel zueinander verlaufende Kulissenrohre (76, 76a) aufgenommen sind, daß durch jedes Kulissenrohr ein U-förmig gebogener Beidraht (77, 78) gesteckt ist, daß je eine Beidrahtklemme (79, 80) jedes Ende des U-förmig gebogenen Beidrahts sowie den parallelen Fahrdraht (1, 2) zusammenklemmt und daß die benachbarte Beidrahtklemmen (79, 80) fest zusammengeschraubt sind.

23. Oberleitungsstützpunkt nach Anspruch 13,
**dadurch gekennzeichnet,**
daß die Führungselemente aus zwei Kulissenrohren (81, 82) bestehen, die an ihren Enden im Abstand zueinander mit je einem Klemmbügel (86, 87) verschraubt sind, und in die jeweils eine Gewindestange (84, 85) eingeführt ist, und daß über die Klemmbügel (86, 87) herausragende Enden der Gewindestangen durch Verschraubung fixierbar sind.

24. Oberleitungsstützpunkt nach Anspruch 13,
**dadurch gekennzeichnet,**
daß zur Ausbildung des Oberleitungsstützpunktes als Festpunkt das Gleitstück (41) auf der Kulisse insbesondere gegen Verschiebung in Längsrichtung festgelegt ist.

25. Oberleitungsstützpunkt nach den Ansprüchen 16 und 24,
**dadurch gekennzeichnet,**
daß die Laschen (42, 43) des Gleitstücks (41) durch an ihnen anliegende Stegklemmen (94-97) festgelegt sind, die an den länglichen Führungselementen (88) der Kulisse angeklemmt sind.

26. Oberleitungsstützpunkt nach Anspruch 4,
**dadurch gekennzeichnet,**
daß zur Ausbildung des Oberleitungsstützpunkts als Festpunkt die Fahrdrähte (1, 2) gegen Verschiebung in Längsrichtung der Kulisse durch an ihnen angeklemmte Doppelstegklemmen (99) arretiert sind, deren obere Klemmhälften an jeweils einem von zwei den Fahrdrähten zugeordneten Runddrähten festgeklemmt sind, die an den Stirnseiten des Rahmens (8) befestigt sind.

27. Fahrdrahtaufhängung mit Oberleitungsstützpunkten nach einem der vorangehenden Ansprüchen,
**dadurch gekennzeichnet,**
daß die Fahrdrähte (1, 2) eines Paars etwa mittig zwischen den Oberleitungsstützpunkten (100, 101), an denen sie eng nebeneinander gehalten sind, voneinander abgespreizt sind.

28. Fahrdrahtaufhängung nach Anspruch 27,
**dadurch gekennzeichnet**
Spreizer (102, 103, 104), die jweils ein Distanzrohr (107, 110) und an dessen beiden Enden mindestens eine Klemme (z.B. 105, 106) zum Anklemmen eines der beiden Fahrdrähte (1, 2) aufweisen.

Fig. 1a

Fig. 1b

Deutsche Eisenbahn Consulting GmbH

11

10

8

A

4

18

16

3

A

**Fig. 2a**

9

4

6

3

7

**Fig. 2c (A–A)**

0 262 607

17

9

5

19

10

18

16

**Fig. 2b**

Fig. 3a

Fig. 3b

0 262 607

Fig. 4a

0 262 607

Fig. 4 b

0 262 607

Deutsche Eisenbahn Consulting GmbH

0 262 607

52    58    53

39

40

54

1    56    2

55    57

Fig. 5

Fig. 6a

0 262 607

0 262 607

Fig. 6 b

Fig. 7

0 262 607

## Fig. 8

39    40

81  84      83      82  85

86                          87

1        2

Fig. 9 b

Fig. 9a

Deutsche Eisenbahn Consulting GmbH

0 262 607

Fig. 10

0 262 607

Deutsche Eisenbahn Consulting GmbH

2

102  100  1  103  101  104

Fig.11a

2

102  100  1  103  101  104

Fig.11 b

Fig. 12 b

Fig. 12 a

0 262 607